# EUROPEAN PATENT APPLICATION

(11) **EP 2 354 715 A1**
(43) Date of publication of application: **10.08.2011**
(21) Application number: 09382312.8
(22) Date of filing: 31.12.2009
(51) Int. Cl.: F24J 2/10, F24J 2/12, F24J 2/14

(54) **A solar energy collector**

(71) Applicant: Universitat Jaume I, 12006 Castellón De La Plana (ES)
(72) Inventor: Castellet MartÍ, José Miguel, 12006 Castelló de la Plana - Castellón (ES); Poyatos Mora, Agustín, 12006 Castelló de la Plana - Castellón (ES); Cabello López, Ramón, 12006 Castelló de la Plana - Castellón (ES); Climent Jordá, Vicent, 12006,Castelló de la Plana - Castellón (ES); Lancis Sáez, Jesús, 12006 Castelló de la Plana - Castellón (ES); Monrós Tomás, Guillermo, 12006 Castelló de la Plana - Castellón (ES); Romero Subirón, Fernando, 12006 Castelló de la Plana - Castellón (ES)
(74) Representative: ABG Patentes, S.L.

(57) **Abstract**

This invention relates generally to a highly efficient solar energy collector which could be manufactured at affordable costs. The solar energy collector comprises an array of reflective cylindrical or circular parabolic surfaces, among other components, arranged in such a way that the focus (line or point) of them are in a region of concentration.
Particular configurations according to embodiments of the invention solve further technical problems improving the efficiency by means of the reduction of surfaces not reflecting the solar radiation to the region of concentration.
Further a process of manufacturing is disclosed, using die forming or extruding techniques.

## Description

### FIELD OF THE INVENTION

This invention relates generally to a highly efficient solar energy collector which could be manufactured at affordable costs.

### PRIOR ART

There is presently a lot of interest throughout the world on research directed to the development of new types of solar collectors and concentrators with higher efficiencies, such as for example solar collectors or concentrators capable of producing high temperatures. However, for these types of solar devices to gain the acceptance of the end users these must be simple and of low cost.

There have been many attempts to develop highly efficient solar devices and some practical devices developed so far are, for example, the parabolic dish collector, the cylindrical parabolic collector, the heliostat, the Fresnel lens of optical grade acrylic and many other sophisticated electronic devices for tracking the sun. All the above mentioned devices are costly, complicated and difficult to manufacture.

The object then of this invention is to provide a highly efficient solar energy collector which is simple, easy to install and which could be manufactured at a considerably much lower costs than present solar devices of the same nature.

More specifically, the object of this invention is to provide a low cost but highly efficient horizontal type of solar energy collector that effectively reflects sun-beams which is therefore suitable for a wide field of applications. The solar energy collector of the present invention is adapted and highly recommended for household purposes, and in the industry, agriculture and service sectors.

### SUMMARY OF THE INVENTION

A first aspect of the invention is a solar energy collector. The collector comprises:
● a base and an array of reflective surfaces located over such base,
● a region of concentration distanced from the base,
wherein the reflective surfaces of the array are adapted to reflect incident solar energy to the region of concentration.

The base is the main reference to locate the elements of the invention. This base is mainly a plane but the embodiments describing for instance a single or multiple glazed ceramic pieces; such pieces have recesses to reduce the weight and the material needed to manufacture such piece.

The reflective surfaces are arranged forming an array of surfaces. Particular embodiments of the invention optimize the location of the surfaces to avoid shadows that reduce the efficiency of the collector.

Along the description and the claims, the term "parallel" will be used characterizing two guidelines. There are two main embodiments: the first group has a bidimensional configuration and the second group has a circular configuration around a common axis.

These two guidelines are straight in the bidimensional embodiments; and, they are parallel because they are equidistant from each other.

This concept is extended for the circular configuration along the description and the claims. Two circular guidelines are also deemed to be parallel if they have their center in the same axis and they are contained in two parallel planes. In this particular case the distance between the two guidelines is maintained as measured between two points of intersection with any of the planes containing the axis.

The reflective surfaces of the invention are such that:
● *each reflective surface of the array is a parabolic surface at least limited by two parallel guidelines, a first guideline separated from the base and a second guideline separated at a greater distance than the first guideline from the base, being both guidelines parallel to the focus of the parabolic reflective surface;*
   When circular guidelines are used; the horizontal projection on the base of both and the focus are concentric circumferences, being the focus projection the centre.
   A parabolic surface is a surface generated from a portion of parabola. An important case is the one considered in the embodiments of claim 2 wherein parabolic surfaces are cylindrical parabolic surfaces.
   A cylindrical parabolic surface is a cylindrical surface generated by a portion of a parabola shifted along at least two parallel straight guidelines. When a ray impinges the surface, if the surface is reflective (specular) and the ray is parallel to the directrix of the parabola, the ray is reflected towards the focus line.
   The focus line is a straight line generated by the focus of the parabola when shifted along straight guidelines parallel to the straight guidelines that generates the cylindrical parabolic surface.
   Some embodiments makes use of surfaces limited by two parallel straight lines and, when the surface is located over the base, the second straight guideline is separated at a greater distance from the base than the first one.
   A further embodiment, the second group with the circular configuration, makes use of a parabolic dish configured with surfaces generated by rotating a portion of parabola (i.e., circular parabolic surface).
● *the region of concentration contains the focus of all the parabolic reflective surfaces which are in a geometrical reference element which is a plane or is an axis, been this geometrical reference element perpendicular to the base,*
   This condition ensures that the incident solar energy impinging the reflective surfaces is directed to the region of concentration in order to collect all the energy arriving to the reflective surfaces. The geometrical reference element perpendicular to the base is a reference that will be used in the next limiting condition.
● *the width of each parabolic reflective surface, measured in a direction perpendicular to the geometrical reference element decreases with the distance of the reflective surface to such geometrical reference element.*
   The width of each parabolic reflective surface, measured in a direction perpendicular to the geometrical reference element is the distance between the horizontal projection of both limiting guidelines.
   The array of reflective surfaces extends outward on the geometrical reference element. The reflective surface closest to the geometrical reference element is the wider surface. The most distant reflective surface is the one having the smallest width. In an embodiment, the array of reflective surfaces are only the reflective surfaces closer to the plane and the more remote reflective surfaces are flat, rather than parabolic surfaces, because its width is not greater than the width of the region of concentration and the curvature do not improve the concentration of solar energy compared with the planar shape.

The embodiments that results from the combination of dependent claims 2 to 16 are included in this description by reference.

A second aspect of the invention is a process for manufacturing a collector according to the first aspect of the invention. A first process is directed to a moulding technique according to claim 17 which is included by reference to this description. This technique generates a collector by pressing a deformable material in die, preferably clay in order to obtain a ceramic piece, with a punch having a surface corresponding substantially to the reflective surface or a portion thereof.

Once the material has been configured, a hardening step is applied. When the material is clay, the hardening step involves heating the clay product at temperatures above 800ºC.

A further step changes the nature of the surface created by the punch to make it reflective. If the product is a ceramic piece, the reflective surface is obtained by means of the creation of an enamel layer or by deposition of a reflective layer on the naked surface.

A further second aspect of the invention is a process for manufacturing a collector according to the first aspect of the invention that exploits the cylindrical shape (i.e., the reflection symmetry) of one embodiment of the product. This process extrudes a deformable material through an extrusion die which has a portion of its perimeter corresponding to the cross section (the plane of symmetry) of the reflective surface or a portion thereof. The rest of steps are as it has been disclosed for the process that obtains the product by pressing the deformable material.

The processes according to the combinations of dependent claims 19 and 20 are included in this description by reference.

### BRIEF DESCRIPTION OF THE DRAWINGS

- Figure 1: Figure 1 depicts a tree-dimensional view of a cylindrical surface generated by a portion of a parabola shifted or moved along two straight guidelines.
- Figure 2: Figure 2 depicts a parabola plotted in a Cartesian geometry.
- Figure 3: Figure 3 depicts a scheme of a first embodiment of a collector of solar energy.
- Figure 4: Figure 4 depicts a scheme of a second embodiment wherein the reflective surfaces are arranged in such a way there is no interference with the reflected rays.
- Figure 5: Figure 5 depicts a scheme of a third embodiment wherein between the reflective surfaces are connecting surfaces adapted to reflect incident solar energy to a further region of concentration. This improved arrangement do not waist the energy impinging onto the connecting surfaces.
- Figure 6: Figure 6 depicts a scheme wherein the reflective surfaces are over a ceramic piece.
- Figure 7: Figure 7 depicts a scheme wherein the reflective surfaces are over a plurality of ceramic pieces put together.

### DETAILED DESCRIPTION OF PARTICULAR EMBODIMENTS OF THE INVENTION

A first embodiment of the invention is based on claim 2 wherein most of the reflective surfaces (1) or all of them are cylindrical parabolic surfaces.

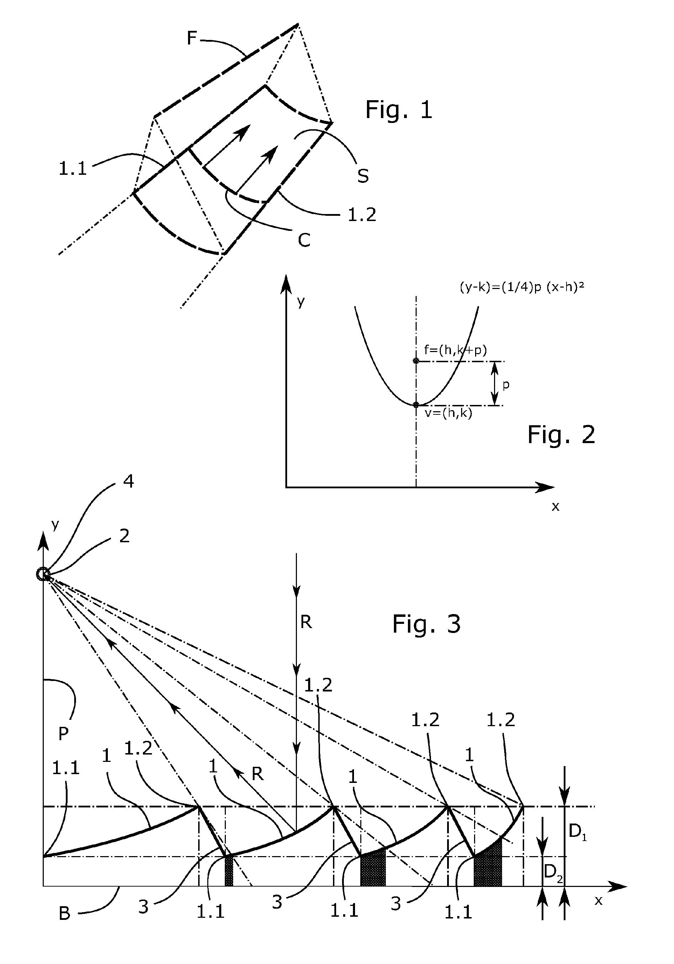

Figure 1 depicts an example of a cylindrical surface (S). The cylindrical surface is generated from a curve (C) that is a portion of a parabola. This curve (C) rests on two straight parallel guidelines (1.1, 1.2). The cylindrical surface (S) is generated when the curve (C) shifts along the straight parallel guidelines (1.1, 1.2). The focus of the parabola will generate a focus line (F) which is the focus of the cylindrical surface (S). This surface enjoys reflection symmetry.

Figure 2 shows a parabola and the coordinate axes. The vertex (v) of the parabola has coordinates (h, k) and the focus (f) of the parabola is located at a height p from the vertex (v). The sectional views of the embodiments in figure 3 an subsequent figures, where cylindrical surfaces are considered first, will show portions of parabola because the straight parallel guidelines (1.1, 1.2) are perpendicular to the paper plane where the figures are plotted. The straight guidelines (1.1, 1.2) will become points in the perspective used.

Figure 3 shows a first embodiment of the invention. Over a base (B) there is an array of reflective surfaces (1) arranged in such a way the incident solar energy (R) is directed to a region of concentration (2). Each reflective surface (1) is a portion of a cylindrical surface limited by two straight guidelines (1.1, 1.2), a first straight guideline (1.1) located in a low position and a second guideline (1.2) located in a higher position; that is, the second guideline (1.2) is farther than the first guideline (1.1) from the base (B).

Each reflective surface (1) is laterally limited by two planes parallel to the sectional view.

All of the reflective surfaces (1) of the array have the focus line (4) in the region of concentration (2). In this embodiment, a ray (R) impinging the reflective surface (1) in a vertical direction (according to the drawing), that is, in a direction perpendicular to the base (B), will be reflected towards the concentration region (2).

This embodiment is suitable to be manufactured in a single ceramic piece wherein the reflective surfaces (1) are obtained by a surface treatment such as the deposition of a reflective enamel layer.

In this embodiment, between two consecutive reflective surfaces (1) there is a flat connection surface (3) and all of them having the same inclination. The inclination aids in mold release operations by facilitating the exit of the ceramic mold.

In this embodiment, the distance between all the second straight guidelines (1.2) and the base (B) are substantially the same. This condition limits the total height of the piece and reduces the size of the mold when manufactured by a molding process.

In this embodiment, the distance between all the first straight guidelines (1.1) and the base (B) are substantially the same. This condition limits the thickness of piece in this part, where it is weaker and therefore showing a minimum resistance.

For every reflective surface (1) figure 3 depicts a line drawn (shadow ray) from the focus line (4) to the second guideline (1.2) which is in the highest position, extending later to reach the next reflective surface (1). The intersection point of the line with the next reflective surface (1) indicates a "shadow" area that has been identified using a black area under the shadowed region.

This "shadow" region is not a real shadow area named "shadow" because it doesn't receive solar energy; it is call a "shadow" region because it cannot be viewed from the focus line (4) and the solar energy that is reflected in this region towards the region of concentration (2) impinges in the connection surface (3) and then this energy is lost.

Therefore, the embodiment of figure 3 could be refurbished, without energy losses, in such a way that the connection surface (3) between two consecutive reflective surfaces (1) follows the shadow ray. In so doing, the thickness will increase as the reflective surface (1) goes away from the geometrical reference element (P); in this bidimensional case a plane.

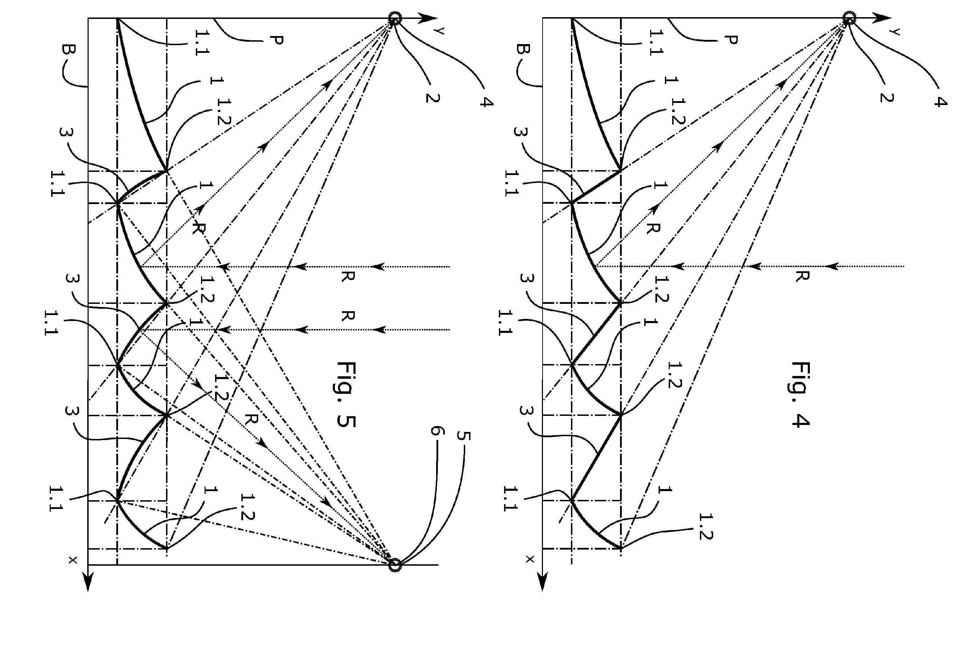

Figure 4 depicts a second embodiment wherein the former technical problem has been solved. Each reflective surface (1) has been shifted and separated from the plane (P) at least until the first straight guideline (1.1) of every reflective surface (1) is out of the shadow region. In this embodiment, the connection surfaces (3) have a larger horizontal projection and therefore the solar energy impinging onto this horizontal projection is lost.

Figure 5 depicts a third embodiment wherein this second technical problem has been solved. This embodiment has a further region of concentration (5) located in the opposite side of the first region of concentration (2). In this embodiment the connection surfaces (3) are also reflective surfaces adapted to reflect incident solar energy to the second region of concentration (5).

Now, this embodiment redirects the solar energy impinging in the connection surfaces (3) to the further region of concentration (5) and therefore this solar energy is not lost.

The reflective surfaces of the connection surfaces (3) are preferably configured with a shape according to a cylindrical surface wherein their focus line (6) are in the region of concentration (5).

Another embodiment of the invention is based on claim 3 wherein the first guideline (1.1) and the second guideline (1.2) are a circumference or portions of a circumference, both with centre in a common axis. The reflecting surface is generated by rotating a portion of parabola that begins in the first guideline (1.1) and ends in the second guideline (1.2); i.e., a circular parabolic surface or a sector of a circular parabolic surface. This surface enjoys axial symmetry. Thus, figures such as 3, 4, 6 and 7 can be the graphical representation of sectional views of embodiments according to this circular configuration wherein the line P is the geometrical axis of the rotation.

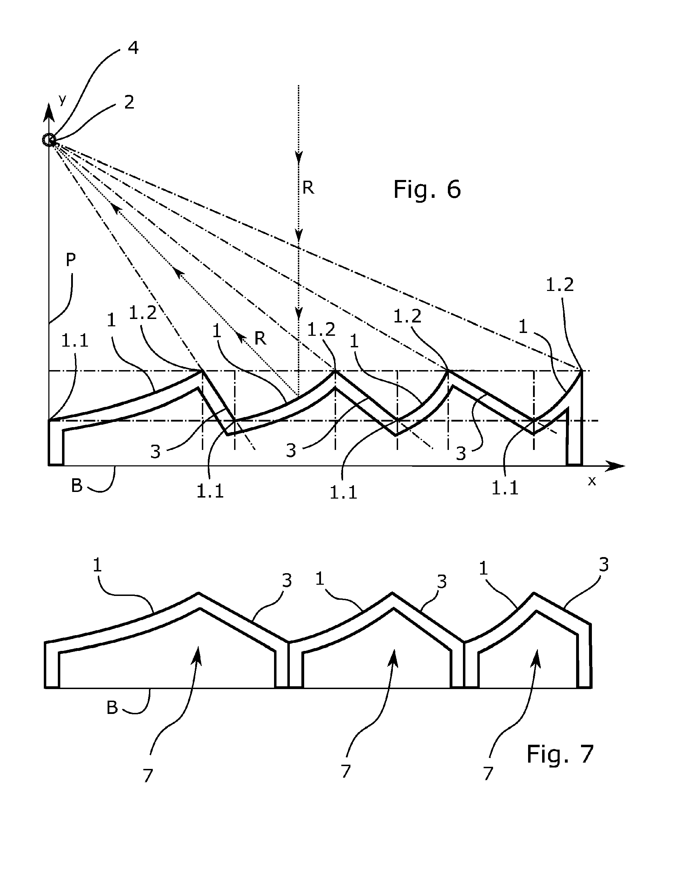

Figures 6 and 7 depict examples where the reflective surfaces (1) and the connection surfaces (3) are the upper surface of a ceramic piece (figure 6) or a plurality of pieces (figure 7) put together.

In order to reduce the weight of the pieces, these have recesses (7) in the lower part.

When the solar energy collector is large and the most remote reflective surfaces are too narrow, for instance, with a width approximately as wide as the region of concentration (2), the parabolic surface do not improve the concentration of solar radiation and planar reflective surfaces are used in such remote locations. This embodiment is within the scope of claim 1 because there is an array of parabolic reflective surfaces (1) and there are additional planar surfaces.

## Claims

1. A solar energy collector comprising:
● a base (B) and an array of reflective surfaces (1) located over such base (B),
● a region of concentration (2) distanced from the base (B),
wherein the reflective surfaces (1) of the array are adapted to reflect incident solar energy (R) to the region of concentration (2) **characterized in that**:
● each reflective surface (1) of the array is a parabolic surface at least limited by two parallel guidelines (1.1, 1.2), a first guideline (1.1) separated (D₂) from the base (B) and a second guideline (1.2) separated at a greater distance (D₁) than the first guideline (1.1) from the base (B), being both guidelines (1.1, 1.2) parallel to the focus (4) of the parabolic reflective surface (1);
● the region of concentration (2) contains the focus (4) of all the parabolic reflective surfaces (1) which are in a geometrical reference element (P) which is a plane or is an axis, been this geometrical reference element (P) perpendicular to the base (B); and,
● the width of each parabolic reflective surface (1), measured in a direction (X) perpendicular to the geometrical reference element (P) decreases with the distance of the reflective surface to such element (P).

2. A collector according to claim 1 wherein the geometrical reference element (P) is a plane and also:
● the first guideline (1.1) and the second guideline (1.2) are straight guidelines,
● the reflective parabolic surfaces (1) are cylindrical parabolic surfaces; and,
● the focus (4) is a focus line.

3. A collector according to claim 1 wherein the geometrical reference element (P) is an axis and also:
● the first guideline (1.1) and the second guideline (1.2) are a circumference or portions of a circumference, both with centre in axis (P),
● the reflective parabolic surfaces (1) are circular parabolic surfaces; and,
● the focus (4) is a point.

4. A collector according to any preceding claim wherein the curvature of the parabolic reflective surfaces (1) is selected to assure that incident solar energy (R) impinging in a direction (Y) perpendicular to the base (B), is reflected to the region of concentration (2).

5. A collector according to any preceding claim wherein the distance (D₁) between the base (B) and the second guideline (1.2) of each parabolic reflective surface (1) of the array is substantially the same.

6. A collector according to any preceding claim wherein the distance (D₂) between the base (B) and the first guideline (1.1) of each parabolic reflective surface (1) of the array is substantially the same.

7. A collector according to any preceding claim wherein a reflective surface (1) and the consecutive reflective surface (1) of the array located farther than the former reflective surface (1) from the geometrical reference element (P) are separated by a distance, measured in a direction (X) perpendicular to the geometrical reference element (P), ranging from 0% to 30% of the width of the former reflective surface (1).

8. A collector according to any preceding claim wherein the second guideline (1.2) of a reflective surface (1) and the first guideline (1.1) of the consecutive reflective surface (1) are connected by means of a connection surface (3).

9. A collector according to claim 8 wherein the connection surface (3) is flat.

10. A collector according to claim 9 wherein all the connection surfaces (3) are flat and have the same inclination.

11. A collector according to any preceding claim wherein a reflective surface (1) and the consecutive reflective surface (1) of the array located farther than the former reflective surface (1) from the geometrical reference element (P) are separated by a distance, measured in a direction (X) perpendicular to the geometrical reference element (P), such that the focus (4) is visible accessible from the first guideline (1.1) of the consecutive reflective surface (1).

12. A collector according to claim 2 and optionally to any one of claims 4 to 11 wherein a further region of concentration (5) is located in the opposite side of the array of reflective surfaces (1) in such a way at least one of the connection surfaces (3) is a reflective surface adapted to reflect incident solar energy (R) to the further region of concentration (5).

13. A collector according to claim 2 and 12 wherein two of more connection surfaces are cylindrical parabolic surfaces and the further region of concentration (5) contains the focus line (6) of the cylindrical parabolic reflective connection surfaces (3).

14. A collector according to any previous claim wherein the reflective surfaces (1, 3) having a width substantially equal to or less than the width of the region of concentration (2, 5) are flat.

15. A collector according to any previous claim wherein each parabolic surface (1), optionally one or two of the neighboring connecting surfaces (3), and at least a portion of the base (B) underneath the surfaces (1, 3) define, totally or partially, the upper and the lower surfaces respectively of an individual solid piece.

16. A collector according to claim 15 wherein the portion of the base (B) of the individual solid piece comprises one or more recesses (7).

17. A process for manufacturing a collector according to any preceding claim comprising the steps:
a) pressing a deformable material in die with a punch having a surface corresponding substantially to the reflective surface (1, 3) or a portion thereof,
b) hardening the product of step a),
c) changing the nature of the surface created by the punch to make it reflectant.

18. A process for manufacturing a collector according to claim 2 and optionally to any one of claims 4 to 16 comprising the steps:
a) extruding a deformable material through an extrusion die which has a portion of its perimeter corresponding to the cross section perpendicular both to the base (B) and to plane (P), of the reflective surface (1, 3) or a portion thereof.
b) hardening the product of step a)
c) changing the nature of the surface created by extrusion to make it reflectant.

19. A process according to any one of claims 17 and 18 wherein the material is clay, the hardening step involves heating the clay product of step a) at temperatures above 800ºC and step c) involves the creation of an enamel layer on the naked surface.

20. A process according to any one of claims 17 and 18 wherein the material is a thermoplastic material, the hardening step takes place upon cooling the material when it comes out of the die and step c) involves the deposition of a reflectant layer onto the naked surface.
